# EUROPEAN PATENT APPLICATION

(11) **EP 1 647 456 A2**
(43) Date of publication of application: **19.04.2006**
(21) Application number: 05256404.4
(22) Date of filing: 14.10.2005
(51) Int. Cl.: B60R 25/00

(54) **An immobiliser for a vehicle wheel**

(30) Priority: 14.10.2004 GB 0422845; 26.04.2005 GB 0508389; 09.06.2005 GB 0511711
(71) Applicant: Denman, Philip, Lincs PE21 6NY (GB)
(72) Inventor: Denman, Philip, Lincs PE21 6NY (GB)
(74) Representative: Powell, Timothy John

(57) **Abstract**

An immobiliser (10) for a vehicle wheel comprises first (11) and second (12) arms that are secured together by a spacer member (13) whose length is adjustable to permit adjustment of the spacing between the said arms. The first arm (11) has secured thereto a cover member (14;22) for obscuring one or more nuts, studs or screw apertures of a vehicle wheel and at least the second arm includes one or more formations (19) for engaging part of a said wheel when the cover member is in use to obscure one or more nuts or studs.

The lengths of the arms (11,12) and the position of the spacer member (13) relative thereto permit the said arms respectively to juxtapose the oppositely disposed faces of a vehicle wheel with the spacer member (13) lying externally of the outer periphery of the wheel. The length of the first arm (11) is selectively adjustable to permit alteration of the distance between the cover member and the spacer member.

## Description

This invention relates to an immobiliser for a vehicle wheel.

In recent years the use of devices to "clamp" the wheels of vehicles, in order to immobilise them, has become commonplace.

The two main reasons for requiring immobilisation of a vehicle wheel are, firstly, to immobilise an illegally or illicitly parked vehicle such as a car or van, for the purpose of forcing the owner or user of the vehicle to pay a fine as a penalty for the act of so parking.

Commercial contractors buy large numbers of vehicle wheel immobilisers for the purpose of immobilising vehicles in this fashion at the request of landowners, local authorities and road authorities.

There is in addition a substantial market for vehicle wheel immobilisers for personal use.

A typical purchaser of such a device would be the owner of a trailer or caravan, who wishes to immobilise it for the purpose of theft prevention.

The invention is of particular benefit to such users. In addition the invention is suitable for use by the aforementioned contractors in the immobilising of vehicles parked illegally or without authority.

There are several designs of vehicle wheel immobiliser available for personal use as aforesaid.

It is necessary for such designs to exhibit considerable strength, because thieves are apt to use great force when attempting to defeat the immobilising effect in order to steal a vehicle, trailer or caravan.

As a consequence the existing designs of vehicle wheel immobiliser available both for commercial and personal use are heavy, bulky items.

Although these characteristics are desirable, as indicated, from the perspective of providing adequate strength in the immobilisers, they are at the same time a disadvantage to personal users.

Such users find it difficult or inconvenient to manipulate large immobilisers, especially when (as is commonly the case) attempting to do so at a time of leisure or recreation.

Moreover, such users very commonly have only limited space for storing an immobiliser in a trailer or caravan while it is being towed.

Despite these problems existing for personal users of wheel immobilisers since their use became commonplace some years ago, no design of immobiliser has hitherto successfully provided in one and the same device the advantages of strength, effectiveness, lightness and (most importantly) compactness when not in use.

In addition to the foregoing there is a need for improved immobilisers for use in conjunction with so-called "alloy" vehicle wheels.

Such wheels are made typically from Magnesium-Aluminium alloys or similar compositions. They are commonly purchased because they are regarded as aesthetically pleasing. Also an alloy wheel is lighter than a steel wheel of equivalent size. Therefore the so-called "unsprung weight" of a vehicle fitted with alloy wheels is less than the unsprung weight of a vehicle having steel wheels. For various reasons, vehicle designers seek to reduce the unsprung weight that is supported by an axle connected to a suspension apparatus.

The above described immobilisers are intended primarily but not exclusively for use on the wheels of caravans and trailers.

Traditionally such wheels have been pressed from steel. However there is an increasing use of lightweight alloys for the manufacture of such wheels.

Furthermore such immobilisers are in any event suitable for use on e.g. motor cars, which have for many years been available fitted with alloy wheels.

According to a first aspect of the invention there is provided an immobiliser for a vehicle wheel comprising first and second arms that are secured together by a spacer member whose length is adjustable to permit adjustment of the spacing between the said arms, the first arm having secured thereto a cover formation for obscuring one or more nuts, studs or screw apertures of a vehicle wheel and at least the second arm including one or more formations for engaging part of a said wheel when the cover formation is in use to obscure one or more nuts or studs, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and wherein the spacer member is pivotably secured to the second arm, whereby the immobiliser is foldable between an operative configuration and a collapsed configuration.

This arrangement solves the problem, known in the prior art, of providing an immobiliser that is robust in use yet which collapses to a very compact configuration for storage.

Conveniently the second arm defines a receptacle for the spacer member when the immobiliser is in its collapsed configuration. Advantageously this effect may derive from the choice of profile used for the second arm.

Preferably the first arm defines a receptacle for the second arm and the spacer member when the immobiliser is in its collapsed configuration. This feature may also derive conveniently from the choice of profile for the first arm. A wide range of first and second arm profiles are possible within the scope of the invention.

According to a second aspect of the invention there is provided an immobiliser for a vehicle wheel comprising first and second arms that are secured together by a spacer member whose length is adjustable to permit adjustment of the spacing between the said arms, the first arm having secured thereto a cover formation for obscuring one or more nuts, studs or screw apertures of a vehicle wheel and at least the second arm including one or more formations for engaging part of a said wheel when the cover formation is in use to obscure one or more nuts or studs, the lengths of the arms and the position of the spacer member relative thereto permitting the said arms respectively to juxtapose the oppositely disposed faces of a vehicle wheel with the spacer member lying externally of the outer periphery of the wheel, the length of the first arm being selectively adjustable to permit alteration of the distance between the cover formation and the spacer member.

An advantage of this arrangement, over prior art immobilisers, is that the first arm may be adjusted, before or during installation of the immobiliser on a wheel, to the shortest possible length consistent with effective operation. This minimises the moment arm defined by the first arm relative to the spacer member. In turn this minimises the chance that a thief can prise the immobiliser off the wheel.

The use of an arm of the immobiliser of adjustable length also allows the overall size of the immobiliser to be adjusted. This in turn permits its alteration between an in-use configuration in which it is dimensioned appropriately for immobilising a vehicle wheel; and a storage configuration in which it is more compact.

Thus the immobiliser of the second aspect of the invention additionally provides at least a partial solution to the technical problem outlined above.

Preferably the first arm includes first and second arm portions that are releasably slideably mateable together so as to permit adjustment of the length of the first member; and a fastener for locking the first and second arm portions together in a chosen position one relative to the other.

More specifically one of the said arm portions includes a socket in which is slideably receivable the other said arm portion, and wherein the fastener penetrates at least one of the arm portions to engage the other of the arm portions for selectively locking the arm portions together in a chosen position one relative to the other.

These features of the invention advantageously permit the economical construction of a robust, effective length adjustment mechanism for the first arm. As noted herein, robustness is a significant requirement in the design of vehicle wheel immobilisers.

The characterising features of the second aspect of the invention described thus far may also be present in the immobiliser according to the first aspect of the invention.

In either embodiment conveniently the cover formation includes one or more cover members secured to the first arm at a location remote from the spacer member such that adjustment of the length of the first arm causes adjustment of the distance of the cover member from the spacer member.

In preferred embodiments of either aspect of the invention the cover member either is a socket that is closed at one end adjacent the first arm and includes spaced therefrom an opening for receiving therein a nut or a stud of a vehicle wheel; or includes a plate secured to the first arm for covering a plurality of nuts or studs of a vehicle wheel.

The use of a socket to cover a single stud or wheel is preferred by users in certain markets, whereas the use of a plate or other member provides the additional reassurance arising from obscuring of all the nuts or studs of a vehicle wheel, thereby assuring that a felon cannot make even a partial attempt at removing the vehicle wheel for the purpose of circumventing the effect of the immobiliser.

In either case the socket or plate may be perforated so as to permit one or more vehicle wheel studs and/or the shank of a vehicle wheel securing screw to pass therethrough in such a way as to secure the socket or plate to the vehicle wheel. This arrangement provides added effectiveness of the immobiliser.

Preferably when the immobiliser includes a plate the latter is rotatably secured to the first arm, whereby the orientation of the laminar plate is adjustable relative to the first arm.

This permits folding of the plate from a compact configuration of the immobiliser to a use configuration. When in the compact configuration the plate may be retracted, by reason of its rotatable securing to the first arm. The plate may be extended so as to protrude from the first arm when the immobiliser is configured for use.

In other embodiments of the invention the cover formation may include both a plate and a socket. In such an embodiment the socket may advantageously protrude via the plate, with the socket secured to the first arm. Such an arrangement conveniently allows the plate to be rotatably secured to the socket.

In a further arrangement the immobiliser may include a hinge interconnecting the plate and the first arm.

In either of the above-outlined embodiments the immobiliser may include a limit arrangement limiting the rotation of the plate relative to the first arm.

Conveniently the limit arrangement includes limit portions of the plate and the first arm that are mutually engageable. More specifically the limit portion of the plate preferably includes a projection and the first arm includes a recess in which the projection is releasably receivable.

Advantageously the shape of the plate is such that:
(i) when the projection is received in the recess the plate is orientated so as, in use of the immobiliser, to cover or otherwise obscure two or more, nuts, studs or screw apertures of a vehicle wheel; and
(ii) when the projection is disengaged from the recess the plate adopts a position restricting or preventing the fitting of the immobiliser to a vehicle wheel.

Also conveniently the plate includes a plurality of fixing formations for securing the plate and the first arm together in a plurality of positions.

This feature advantageously allows adjustment of the extent to which the plate may protrude from the first arm when in its use configuration.

The feature may also beneficially permit adjustment of the degree of compactness of the immobiliser when the plate is rotated to its compact configuration.

In yet a further preferred arrangement the immobiliser includes a socket, protruding from the plate, that is closed at one end adjacent the plate and includes spaced therefrom an opening for receiving therein a nut or stud of a vehicle wheel. Such a socket may be additional to any other socket secured to the first arm.

In a preferred embodiment of the invention the plurality of fixing formations is constituted as a series of spaced apertures formed in the plate.

In any event, the plate conveniently is of a shape and size suitable for covering a plurality (preferably all) of the nuts, screws or studs securing a range of vehicle wheel sizes.

Preferably when the immobiliser is in accordance with the second aspect of the invention, and hence includes a length-adjustable first member as defined hereinabove, the first arm is pivotably secured to the spacer member; the first arm is pivotably secured to the spacer member; and the spacer member is pivotably secured to the second arm, whereby the immobiliser is foldable between an operative configuration and a collapsed configuration.

This important feature of the invention permits folding of the main components of the immobiliser between use and compact configurations.

The use of pivotable connections advantageously maintains robustness of the immobiliser while assisting to provide the long-sought advantage of collapsibility.

Conveniently the second arm defines a receptacle for the spacer member when the immobiliser is in its collapsed configuration.

Also preferably the first arm defines a receptacle for the second arm and the spacer member when the immobiliser is in its collapsed configuration.

These features advantageously provide for a particularly neat arrangement when the immobiliser is not in use. Thus the immobiliser of the invention is of very great benefit to caravanners and trailer users.

In an immobiliser according to either aspect of the invention conveniently the first arm includes a wall member having formed therein a wheel-engaging formation for engaging part of a vehicle wheel. Preferably the first arm includes a projection in the vicinity of the wheel engaging formation.

Conveniently the wheel engaging formation is or includes one or more recesses formed on the wall member.

These features, which are known *per se* in the wheel immobiliser art, permit an arm of the immobiliser of the invention to engage e.g. the rim of the vehicle wheel, thereby preventing an unauthorised user from attempting to prise the immobiliser away from the wheel.

Preferably the second arm includes a wall member having formed therein one or more wheel engaging formations for in use of the immobiliser engaging a vehicle wheel on its opposite face to that adjacent which the first arm engages the wheel.

More specifically the second arm includes a wall member having formed therein a plurality of teeth defining the formations for engaging part of a wheel.

These features also are known *per se* in the art of wheel immobilisers. They advantageously assist in preventing the prising of the immobiliser from a vehicle wheel.

Conveniently the spacer member comprises two elongate sub-members that are longitudinally moveable one relative to the other, the said sub-members being connected one to the other by a jack mechanism such that on operation of the jack mechanism the positions of the sub-members relative to one another are adjustable so as to adjust the length of the spacer member and hence the spacing between the first and second arms.

More preferably the sub-members define a shroud that obscures the jack mechanism, the shroud having formed therein an aperture to permit access to and operation of the jack mechanism by a user.

The immobiliser of the invention preferably also includes a releasable locking member for selectively closing off the aperture formed in the shroud, whereby to limit access to the jack mechanism.

In a particularly preferred embodiment the jack mechanism includes a lead screw and nut combination, one of the lead screw and nut being secured to one of the sub-members of the spacer member ; and the other being secured to the other of the sub-members.

The foregoing features provide an advantageously strong, secure and compact means of adjusting the length of the spacer so that the immobiliser is useable with a variety of wheel widths.

According to a third aspect of the invention there is provided an immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, and wherein the first formation includes a proximal portion, adjacent the first arm, and a distal portion secured to the proximal portion and spaced from the first arm, at least one exterior dimension of the proximal portion being greater than a corresponding exterior dimension of the distal portion.

This arrangement is particularly suited, in ways described in more detail below, to the securing of alloy wheels.

Preferably the proximal and distal portions of the first formation are cylinders and they diameter of the exterior of the proximal portion is greater than the diameter of the exterior of the distal portion. It is also preferable that the immobiliser includes a tapered portion interconnecting the proximal and distal portions of the first formation. Yet a further, preferable feature is that the distal portion of the first formation is hollow and includes an aperture that is open at an end remote from the first arm.

The foregoing features render the immobiliser of the invention suited for use with alloy wheels. Thus it is particularly preferable that at least part of the first formation in use is receivable in a recess, in an alloy wheel, for accommodating a nut, a stud or a screw for securing the wheel to a vehicle.

According to a fourth aspect of the invention there is provided an immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, wherein the first formation includes a proximal portion, adjacent the first arm, and a distal portion secured to the proximal portion and spaced from the first arm, and wherein the first and/or the second arm includes one or more wheel engaging portions shaped generally in conformity with the profile of an inflated vehicle tyre.

This arrangement of features further renders the device of the invention suitable for use with alloy wheels.

Preferably the first and second arm each include a pair of mutually divergent wall members, and the or each said wheel engaging portion is at least partly defined by a said wall member. It further is an optional feature of the invention that the wheel-engaging portion of the first arm is engageable with a said wheel only in the vicinity of an inflated tyre forming part of the wheel.

According to a fifth aspect of the invention there is provided an immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, wherein the first formation includes a proximal portion, adjacent the first arm, and a distal portion secured to the proximal portion and spaced from the first arm, and wherein the formation includes a cover plate that is moveably secured to the first arm and in use of the immobiliser obscures one or more said nuts, studs, screws or screw apertures.

This arrangement assists in providing a collapsible structure that is robust when erected for use.

In a preferred embodiment of the invention the cover plate includes protruding therefrom a securing protrusion that in use of the immobiliser is received in an aperture extending through part of the first arm such that the securing protrusion perforates the first arm so as to prevent movement of the cover plate relative to the first arm, the securing protrusion being releasable from the aperture on removal of the immobiliser from a said vehicle wheel.

Conveniently the cover plate is moveable relative to a cylinder secured to the first arm in both the circumferential and longitudinal directions defined by the cylinder except when the immobiliser is in use.

Optionally the second arm includes formed therein a profiled recess for limiting engagement, of the second arm and the rim of a wheel to which the immobiliser is secured, to an extreme of movement of the second arm relative to a said vehicle wheel. It is also preferable that the or each profiled recess includes a curved recess portion terminating in a rectilinear edge. Yet further optional features of the immobiliser of the invention are, firstly, that the curved recess portion extends between a distal region of the second arm that is spaced from the free end of the second arm, and the rectilinear edge that is spaced further from the free edge; and secondly that the immobiliser includes a length adjuster for adjusting the length of the second arm.

Alternative jack mechanisms may of course be used within the scope of the invention.

According to a sixth aspect of the invention there is provided an immobiliser for a vehicle wheel comprising first and second arms that are secured together by a spacer member the length of which is adjustable to permit adjustment of the spacing between the said arms, the first arm having secured thereto a cover formation for obscuring one or more nuts, studs or screw apertures of a vehicle wheel and at least the second arm including one or more formations for engaging part of a said vehicle wheel when the cover formation is in use to obscure one or more nuts, studs or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the cover member protrudes from the first arm and wherein the length of protrusion of the cover member is adjustable.

Preferably the cover member is slidable relative to the first arm and the immobiliser includes a lock for locking the cover member at a chosen extension relative to the first arm.

There now follows a description of a preferred embodiment of the invention, by way of non-limiting example, with reference being made to the accompanying figures in which:
Figure 1 is a perspective view of a first embodiment of immobiliser according to the invention, in an operative configuration;
Figure 2 shows the Figure 1 immobiliser in a collapsed, storage configuration;
Figure 3 shows parts of a second embodiment of wheel immobiliser according to the invention, with the moveable parts of its first arm separated one from the other;
Figure 4 shows the Figure 3 embodiment in its collapsed, storage configuration;
Figure 5 shows the Figure 3 embodiment with its wheel nut-covering plate in an extended position;
Figure 6 shows the Figure 4 embodiment of the invention in a partially erect configuration;
Figure 7 shows in side elevational view one further form of cover plate according to the invention;
Figure 8 shows the cover plate of Figure 7 in perspective view;
Figure 9 is a perspective view of a third embodiment of wheel immobiliser according to the invention;
Figure 10 is a side elevational view of a fourth embodiment of wheel immobiliser according to the invention, showing a moveable cover plate in an in-use configuration;
Figure 11 is a perspective view of the Figure 10 immobiliser, showing the moveable cover plate in a further configuration that is suitable for storage and transportation, and
Figures 12 and 13 show in schematic, cross-sectional view two positions of adjustment of yet a further arrangement lying within the scope of the invention.

Referring to the drawings, a first embodiment of wheel immobiliser 10 for a vehicle wheel comprises first and second arms 11. 12 that are secured one to the other by a spacer member 13.

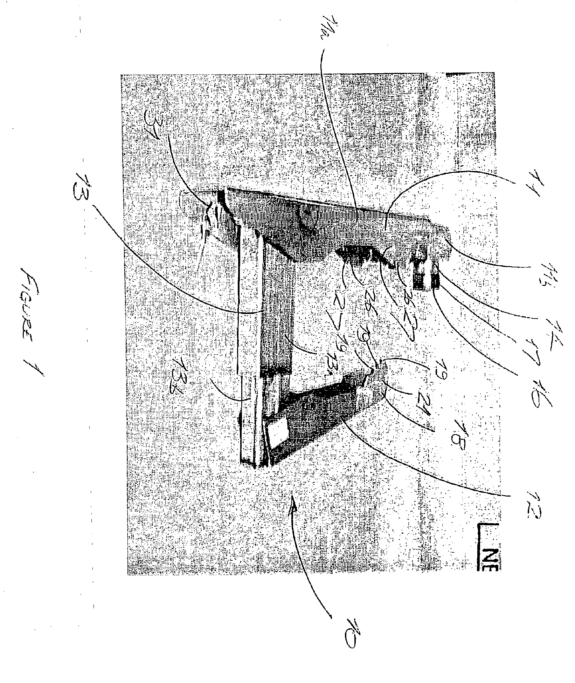

As shown in Figure 1. which illustrates the immobiliser 10 in an erect configuration that it adopts in use, the arms 11, 12 and the spacer member 13 define an essentially "U"-shaped device, one arm 11 of which is longer than the other, and all three major components of which lie essentially in the same plane.

The length of spacer member 13 is adjustable, in a manner described in more detail below, to permit adjustment of the spacing of the arms (and hence the width of the "U" shape of the immobiliser in its in-use configuration).

First arm 11 has secured thereto a cover member. In the embodiment shown in Figure 1 the cover member takes the form of a socket 14 secured at the free end of first arm 11 and extending generally towards second arm 12.

Socket 14 is open at its end 16 remote from first arm 11. In the vicinity of its open end socket 14 includes an optional encircling annulus of rubberised or polymeric material. This protects against damage both the socket 14 and other apparatuses that it may, in use, engage.

As illustrated, socket 14 is essentially a circular hollow cylinder.

The purpose of socket 14 is in use of the wheel clamp to overlie and hence cover a nut, a stud or a securing screw aperture of a vehicle wheel so as to prevent access to it for the purpose of removing the wheel from the vehicle to which it is secured.

Other shapes of socket are possible within the scope of the invention. Socket shapes which cover two or more nuts etc. are possible.

At its free end 18 remote from spacer member 13, the second arm 12 includes a plurality of formations for engaging part of a said wheel when the socket 14 is in position to obscure the nut, stud or screw aperture as aforesaid.

Such formations in the embodiment shown in Figure 1 take the form of a series of teeth 19 formed as serrations in a protruding wall portion 21 defining part of the free end 18 of second arm 12.

In use of the immobiliser 10 the socket 14 is located initially so as to obscure a nut, stud or screw aperture of a vehicle wheel, with the first arm 11 extending across the exposed face of the wheel on the same side as the socket 14.

The second arm 12 as a consequence is positioned to extend across the opposite face of the wheel, with the spacer member 13 lying beyond the outer periphery of the wheel represented typically by an inflated tyre.

In order to position the immobiliser 10 in this manner, it is necessary to adjust the length of the spacer member 13 to a maximal value. Once the socket 14 is in position as desired, however, the user then shortens the spacer member 13 so as to bring the teeth 19 (or other equivalent formations in other embodiments of the invention) into tightly gripping engagement with the face of the wheel that lies opposite the side engaged by socket 14.

As long as the adjustment of spacer member 13 is under the influence of a securely fastenable adjustment mechanism, the immobiliser 10 is thereafter firmly secured on the wheel. Any attempt at rotating the wheel with the immobiliser 10 so attached therefore results in only a small amount of angular movement before the spacer member 13 engages either the ground on which the vehicle wheel rests, or part of the bodywork or suspension of the vehicle, such that the vehicle cannot be towed or driven away.

The foregoing basic aspects of the operation of the wheel immobiliser 10 are, in themselves, known in the immobiliser art. However, the immobiliser 10 of the invention exhibits considerably greater utiliy than the prior art arrangements firstly by reason of the length of the first arm 11 being selectively adjustable to permit alteration of the distance between the cover member and the spacer member.

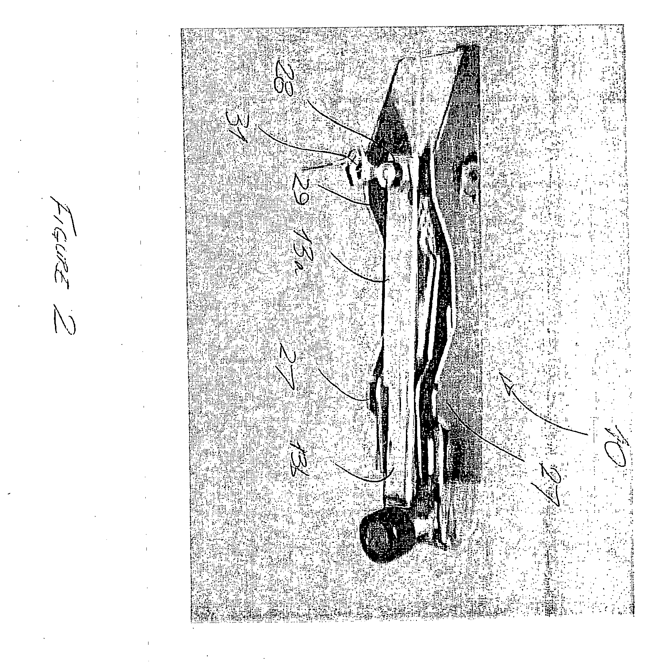

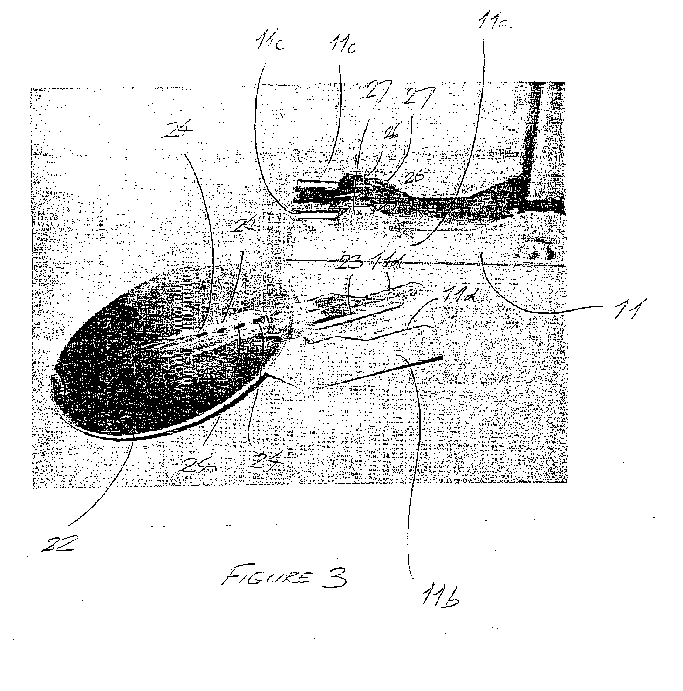

This effect is best illustrated with reference to Figure 3, which shows an arrangement similar to that of Figure 1 except that the socket 14 is replaced by a cover plate in the form of a flat metal disc 22. Apart from this difference, the features of the first arm 11 visible in Figure 3 are the same as their counterpart features in the arrangement of Figure 1.

As is best shown in Figure 3, first arm 11 comprises two sub-components 11a, 11b. The respective sub-components 11a, 11b are also visible in Figure 1.

Each arm sub-component 11a, 11b is formed (eg. fabricated or pressed) from a length of generally U-shaped metal channel member.

The cross-sectional dimensions of the channel defined by sub-component 11 a, of arm 11, are slightly greater than those of portion 11b whereby arm sub-component 11b is slideably receivable longitudinally within the channel represented by portion 11a.

At its free end the upstanding side walls defining the channel section of sub-component 11a include inwardly directed flanges 11c extending a short length rearwardly from the free end. These serve to constrain the arm sub-component 11b and prevent it from falling out of the channel represented by portion 11a when inserted therein. For this purpose, portion 11b includes extending from its free end a pair of flat camming surfaces 11d that are respectively slideably engageable with the undersides of the flanges 11c.

Sub-component 11b has formed in one of its upstanding side walls defining its channel section an elongate slot 23 extending generally parallel to the longitudinal direction of the arm 11. In practice a bolt (not shown in the figures) would extend from the upstanding side wall of portion 11 a that in use of the immobiliser 10 lies adjacent the slot 23. The bolt extends through the slot 23 so that, through the use of a nut in combination with the bolt, it is possible releasably to secure the sub-component 11b received in the channel of sub-component 11a, in any of a range of positions such that the length of the arm 11 as a whole is readily adjustable.

The nut and bolt may be arranged so as to prevent separation of the portion 11b from the arm portion 11a by an unauthorised user.

This may be achieved eg. by welding the bolt to the arm portion 11 a, such that the only means of releasing the nut is from inside the channel defined by the two arm portions 11a, 11b when assembled together. Since the interior of this channel is obscured when the immobiliser 10 is in use to secure a vehicle wheel, and since as described below the immobiliser 10 includes further means for preventing its operation by unauthorised users, the fixing of the portion 11b to the portion 11a in arm 11 is rendered secure.

The ability to adjust the length of arm 11 provides numerous advantages.

Firstly it allows minimisation of the length of the first arm in use of the immobiliser 10. Thus the moment arm defined by first arm 11 relative to spacer member 13 is also minimised, thereby reducing the maximum moment that an unauthorised person may apply to the immobiliser 10 during any illicit attempt at removing it.

In this regard the length of first arm 11 may be adjusted so that the socket 14 or other cover member covers the nut(s) etc., that is/are in use closest to the spacer member, thereby helping to minimise the moment arm.

Secondly, it permits the use of the immobiliser 10 with any of a wide range of wheel diameters.

This is in contrast to the prior art arrangements, in which it is necessary to purchase separate immobilisers for differing wheel sizes.

Thirdly the ability to adjust the length of arm 11 is one of several important features of the immobiliser 10 of the invention permitting its alteration between a compact, storage/transportation configuration, and an erect, usage configuration.

The cover plate 22 of Figure 3 is, in contrast to the socket 14 of Figure 1, shaped and dimensioned to cover a plurality (and in practice preferably all) of the nuts, studs or screw sockets of a wheel.

An advantage of this arrangement is that in use of the immobiliser 10 it prevents access to all of the nuts, studs or screw sockets simultaneously. This prevents any attempt at removing a vehicle wheel.

Although not shown in the drawings, the cover plate 22 may if desired be perforated in a pattern corresponding to the locations of the fasteners for a vehicle wheel, whereby using such fasteners the cover plate 22 may itself be secured to the wheel for additional security. This is particularly desirable when one or more of the wheel nuts or other fasteners is of the locking type known *per se* in the vehicle security art.

Figures 3 to 6 show an optional feature of the cover plate 22 in the form of a plurality of fixing formations for securing the plate 22 and the first arm 11 together in a plurality of positions.

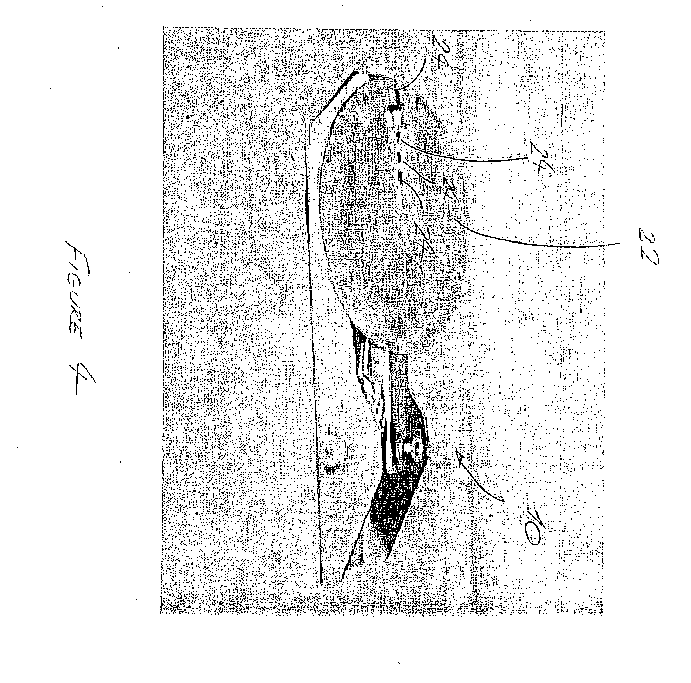

In the embodiments shown the said formations are in the form of a linear series of apertures 24 perforating the cover plate 22. This permits bolting of the cover plate 22 to the portion 11 b of arm 11 in any of a plurality of positions. This is illustrated by comparison between Figures 3 and 4, in which the cover plate 22 is shown secured at two respective positions.

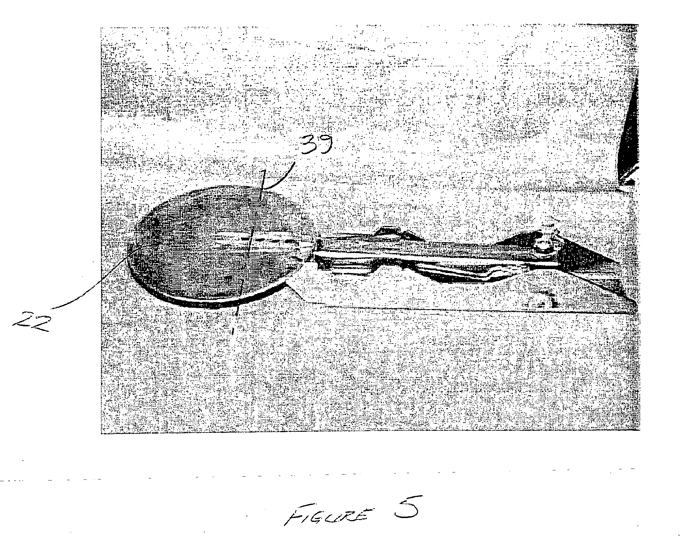

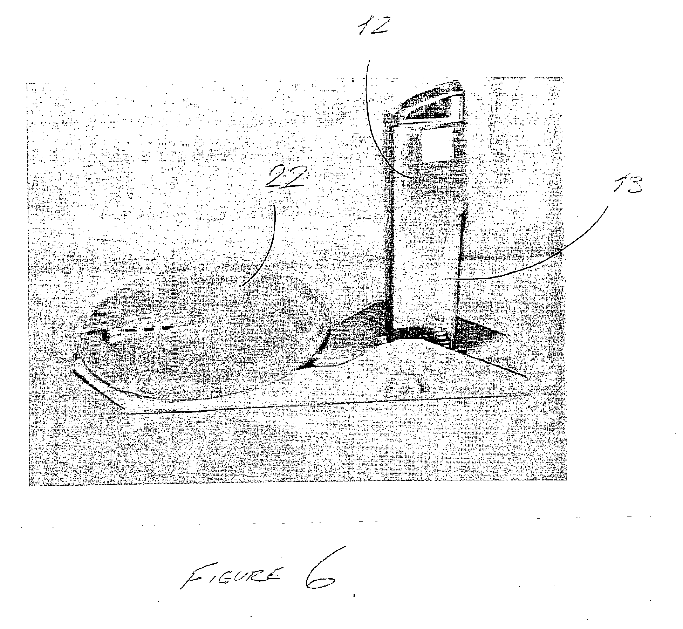

The use of a nut and bolt combination (or, more preferably, the combination of a stud secured to arm portion 11a and a nut) to secure the cover plate 22 to the arm 11 permits pivoting of the cover plate between a retracted position illustrated in Figures 4 and 6 and an extended, usage position as shown in Figures 3 and 5.

The ability to pivot the cover plate 22 in this manner further advantageously permits adjustment of the immobiliser 10 between compact and usage configurations, thereby further improving its utiliy for the caravanner and the trailer user.

In the embodiment of Figures 3 to 6 the cover plate 22 is shown as a circular metal disc. The cover plate may if desired adopt different shapes and/or or constructions, although the use of a circular plate is preferred because its curved periphery minimises the risk of an authorised user employing an implement to try and bend or fold the cover plate away from the nuts, studs, etc of the vehicle wheel.

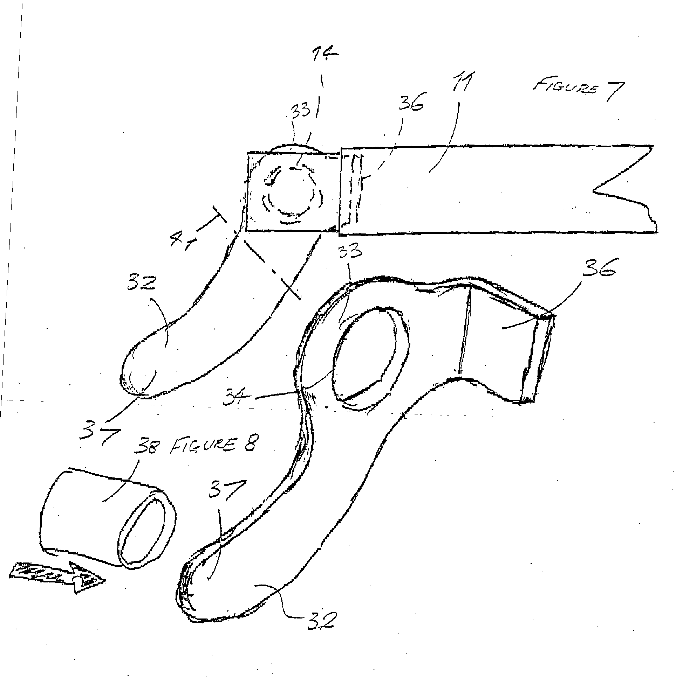

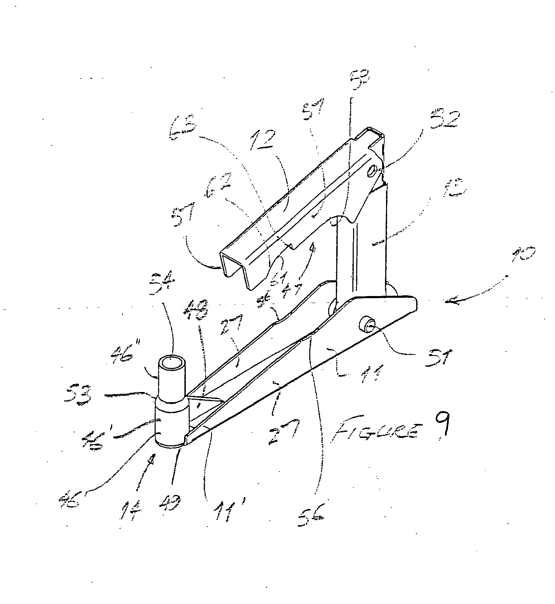

Figures 7 and 8 show an alternative form of cover plate 32 in accordance with the invention.

In the arrangement shown, cover plate 32 is intended for use in combination with socket 14.

Cover plate 32 is a generally flat, typically metal plate including a part-circular protuberance or boss 33 formed at a location towards one end thereof.

Protuberance 33 has formed therein a circular aperture 34 that is of a slightly larger diameter than that of the socket 14. Thus plate 32 is mountable on socket 14 such that plate 32 is rotatable relative thereto.

In view of the length over which socket 14 extends (in a direction perpendicular to the view represented by Figure 7), plate 32 is also slidable longitudinally along the length of socket 14.

The annulus of polymeric or rubberised counting material 17 visible in eg. Figure 1 may be used to retain plate 32 loosely captive relative to socket 14.

Alternatively, another feature (such as a flange formed at the free end of socket 14) may be used conveniently to retain the plate 32 on the socket 14.

At its end adjacent aperture 34, plate 32 includes a tab 36 that is cranked at 90° to the remainder of plate 32. Tab 36 typically could be formed by metal fabrication or pressing techniques known to those of skill in the art.

The purpose of tab 36 is, in use of the immobiliser 10, to enter into the U-shaped channel defined by first arm 11, and more particularly portion 11b in the non-limiting embodiment shown. Thus when plate 32 lies at the end of socket 14 that is adjacent to first arm 11, tab 36 lies within the aforesaid U-shaped channel.. Engagement between tab 36 and the walls, or another protruding part, of the channel then prevents rotation of plate 32 relative to socket 14.

On the other hand when plate 32 is moved towards the free end of socket 14 the tab 36 disengages from the U-shaped channel with the result that plate 32 becomes freely rotatable relative to socket 14.

At its end 37 remote from tab 36, plate 32 includes a shaped extension the design of which is intended to cooperate with a nut, stud or screw socket of a vehicle wheel.

In use of an immobiliser 10 including a cover member 32 as shown in Figures 7 and 8, before or during installation of the immobiliser the plate 32 is initially moved towards the free end of socket 14. This assures that the tab 36 is free of the U-section channel of first member 11. Consequently it is possible to rotate the cover plate 32 to the position shown in Figure 7.

Thereafter, the cover plate 32 is moved along the socket 14 with the result that the tab 36 engages in the U-section channel the sides of which subsequently prevent rotation of the cover plates 32 relative to socket 14.

As noted, during installation of the immobiliser 10 the spacer member 13 is adjusted in length to tighten the arms 11, 12 of the immobiliser about the faces of a vehicle wheel. In the case of the Figures 7 and 8 arrangement, this action additionally presses the plate 32 (by reason of engagement with part of the vehicle wheel or a nut or a stud associated therewith) to assure that the tab 36 remains in the U-section channel of first arm 11 thereby preventing rotation of the cover plate 32.

This action additionally locks the cover plate 32 in position such that it is impossible for an unauthorised user to release it.

On removal of the immobiliser 10, the pressure on the cover plate 32 is released such that it can be slid along the socket 14 towards its free end once again.

At this point the tab 36 disengages from the U-section channel. The cover plate 32 is then rotatable relative to socket 14 such that it lies generally parallel to first arm 11, thereby reducing the overall dimensions of the immobiliser 10 so that it is suitable for storage and/or transportation. However in this position part of the cover member 32 may if desired be arranged to protrude beyond the dimensions of the first arm 11. When thus configured the member 32 can be arranged to engage a vehicle wheel in such a way as to discourage use of the immobiliser unless the member 32 is first re-positioned correctly for use.

It should be noted that herein "co-operate" when used in relation to one of the cover formations such as cover plate 32 does not necessarily mean "engage".

Thus the cover 32 "co-operates" with a nut, stud or screw aperture in the sense accepted in this art, by reason of obscuring the aforesaid feature. It is not necessary for there to be physical contact between the cover plate 32 and the nut, stud or aperture in order to achieve the desired effect of preventing access by an unauthorised user.

However, it is possible within the scope of the invention to include an optional, further socket 38 secured to the cover plate 32 adjacent end 37 thereof, and projecting on the same side of first arm 11 as the socket 14. In this arrangement there would therefore be provided two separate sockets that respectively engage different nuts, studs or screw apertures of the vehicle wheel.

Figure 8 shows this socket 38 detached from cover plate 32, but in practice the socket 38 and plate 32 would be rigidly secured together by welding. This is signified schematically by the arrow in Figure 8.

The cover plate 32 may if desired be perforated in the vicinity of socket 38 (and indeed in any of the embodiments of the invention the end of socket 14 adjacent arm 11 may be also be perforated) for the purpose of insertion of a locking wheel nut or screw therethrough.

In yet a further embodiment of the invention (not shown in detail the figures) the cover plate 22 of Figures 3 to 6 may include a hinge extending from one side of the plate 22 to the other. Such a hinge may effectively divide the plate 22 into two leaves that are foldable between a compact configuration (when the apparatus 10 of the invention is in a storage/transportation configuration) and an operative configuration in which the cover plate 22 would adopt substantially the form shown in eg. Figures 3 to 6.

It would be necessary for the hinge employed in such an arrangement to have a limited range of motion, whereby on tightening of the arms 11, 12 of the immobiliser 10 about the faces of a vehicle wheel the cover plate 22 is prevented from unfolding beyond the flat configuration shown in Figures 3 to 6. This may be achieved by reason of the cover member engaging the arm 11 on unfolding to its operative position.

Such a hinge may also be employed in eg. the Figures 7/8 arrangement.

In Figures 5 and 7 the approximate line about which the hinge would fold is shown in each case by chain lines 39, 41. The precise design of the hinge would be within the knowledge of the worker of ordinary skill.

Thus, overall, the cover formation may take any of a very wide range of possible forms within the scope of the invention.

As best illustrated by comparison between Figures 1 and 2 (with regard to the first embodiment) and Figures 4, 5 and 6 (with regard to the second embodiment of the invention), the first arm 11 is pivotably secured to the spacer member 13; and the latter is pivotably secured to the second arm 12.

The respective pivots lie at the ends of the spacer member 13.

The second arm 12 is defined in the embodiments shown as a U-section channel member. In another embodiment of the invention (not illustrated) the arm 12 may be an L-section angle member.

In either embodiment, the dimensions of the walls of the second arm 12 are such as to define a receptacle for the spacer member 13 when the latter is pivoted to lie parallel to the second arm 12. Figure 6 shows the spacer member 13 received in this manner within the receptacle defined in the second arm 12, in the context of the second embodiment of the invention described herein.

As previously described, arm 11 is also formed as a U-section (or other section) channel member. The dimensions of this channel member are such that when the spacer member 13 is pivoted to lie parallel to the first arm 11, the channel section of the first arm 11 defines a receptacle for the spacer member 13 and the second arm 12 (since the spacer member 13 can only be pivoted to lie adjacent the first arm 11 following pivoting of the spacer member 13 and the second arm 12 so that the former is received within the latter).

In other embodiments of the invention other channel profiles (such as but not limited to V-section channels, part-polygonal channels, part-circular channels and combinations of different channel profiles) may be used for the arms 11, 12. It is in this regard desirable merely that the respective arm members 11, 12 each include one or more walls defining a region in which the spacer member 13 (when considering second arm 12) or the second arm 12 in which the spacer member is received (when considering the first arm 11) respectively is receivable.

The facility to receive the various arms one inside another permits the folding of the immobiliser to a very compact configuration, as illustrated with regard to the first embodiment of the invention in Figure 2. In this configuration, the three primary members of the device lie parallel to one another and are received one within another in the manner described. Thus the outer dimensions of the folded immobiliser 10 are determined almost exclusively by the dimensions of the first member 11. Neither the spacer member 13 nor the second arm 12 protrudes appreciably from the folded device.

As is best shown in Figures 1, 2 and 3, the first arm 11 includes part way along its length, in each of the side walls defining its U-section, a projecting wall portion 27.

In the embodiment shown this wall portion is shaped as a truncated triangle, since this has been found to be strong and robust in use. However, of course other shapes of projection are possible.

The protruding wall portion 27 has formed therein a wheel-engaging formation in the form of a recess 26.

Since the first arm 11 has two parallel side walls defining the U-section channel, in practice there are two recesses 26 spaced from one another on opposite sides of arm 11.

The purpose of these recesses 26 is to engage the rim or another part of the vehicle wheel to which the immobiliser is applied. This in turn facilitates fitting of the immobiliser to the wheel, since the engagement between the recesses 26 and the wheel rim provides for pivoting of the immobiliser 10 relative to the wheel rim while it is being installed.

Once the spacer member 13 is adjusted in the manner described above to tighten the immobiliser 10 onto the wheel, however, the portion of the rim engaged by the recesses is gripped tightly thereby. This prevents any attempt at removing the immobiliser 10 from the vehicle wheel by withdrawing it parallel to a radius of the wheel.

The second arm 12 as noted includes further wheel-engaging formations in the form of serrations or teeth 19.

The length of the second arm 12 is such that the vicinity of its free end, in use, engages the dished portion of the "rear" face of the vehicle wheel to which the immobiliser is secured. The provision of a plurality of teeth or serrations therefore permits secure engagement of the second arm 12 with the vehicle wheel regardless of the precise dimensions of the dishing of the aforesaid "rear" face.

Thus the design of the second arm 12 also assists in preventing unauthorised removal of the immobiliser 10.

As best shown in Figures 1 and 2, the spacer member 13 comprises two hollow sub-members 13a, 13b of which one, 13b, is movably received within the hollow interior of the other, 13a, in the manner of the sections of a telescope.

A jack mechanism (not visible in the drawings) lies substantially obscured within the hollow interiors defined by the sub-members 13a, 13b of spacer member 13.

The jack member may take the form of a nut that is rigidly secured for example within the interior of sub-member 13b so as to receive threadedly therein a thread of a lead screw that is rotatably secured to the sub-member 13a.

In this manner a jack is provided that operates to lengthen or shorten the spacer member 13 as desired, through the act of rotating the lead screw clockwise or anti-clockwise.

In order to maintain security of the jack member, its components are normally contained within the shroud defmed by the sub-members 13a, 13b such that it is not possible for an unauthorised user to gain access to the lead screw for the purpose of lengthening the spacer member 13 and consequently removing the immobiliser 10 from a vehicle wheel.

Adjacent one end the sub-member 13a includes formed therein an aperture 28 by which an authorised user may gain access to the end of the lead screw for the purpose of adjusting the length of the spacer member 13.

The aperture 28 is normally closed by a *per se* known lock 29, releasing of which is possible at the option of an authorised user having possession of the appropriate key 31 for locking and unlocking the lock.

Thus in normal use of the immobiliser 10 of the invention the user would firstly remove or otherwise release the lock 29, before operating the lead screw to cause adjustment of the length of spacer member 13 as part of the process, described hereinabove, of applying the immobiliser 10 to a vehicle wheel. After such adjustment the user would re-insert the lock into aperture 28 and lock it in place before removing the key 31, thereby assuring security of the installed immobiliser.

Further details of a jack mechanism suitable for use in the apparatus of the invention are disclosed in GB 2 179 607. The attention of the reader is directed to this disclosure, the entire content of which is incorporated herein by reference.

Although in the embodiment described herein the sub-members 13a, 13b are shown as being rectangular section, hollow members. of course other shapes (such as but not limited to polygon- or circular-section members) are possible within the scope of the invention.

Overall the immobiliser 10 of the invention represents a significant improvement over the prior art, by reason of beiilg readily convertible from a very compact, storage configuration to an erect, robust, operative configuration.

Typically the immobiliser 10 will be manufactured (eg. by welding, fabrication, pressing or a combination of these processes) from a suitably strong metal such as certain grades of steel. However, other materials are also possible including but not limited to high strength composite materials, eg. carbon fibre composites. Such materials although more expensive than steels have the advantage of exhibiting low densities while maintaining high tensile strength values.

Although the invention has been described in relation to two specific embodiments, numerous variations on the principles of the invention disclosed herein will occur readily to those of skill in the relevant art. All such variations are within the scope of the invention.

In this regard, in its broadest form the invention is considered to reside in a vehicle wheel immobiliser having a pair of arms that are adjustably spaced from one another by a length-adjustable spacer member, in which one or more components of the immobiliser are movably secured together so as to be convertible between a compact, folded configuration used for storage and/or transportation; and an extended or erect configuration intended for use.

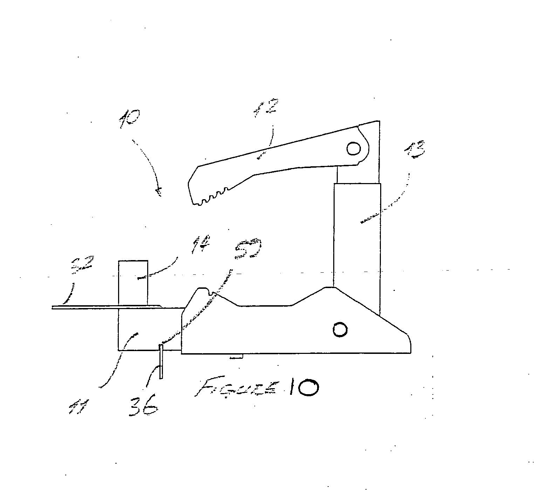

Referring to Figure 9, an immobiliser 10 includes several of the features described and illustrated in Figures 1 to 8. The immobiliser of Figure 9 however omits the features permitting adjustability of the length of the first arm 11 thereof. Additional features are as described below.

In the immobiliser 10 of Figure 9 the spacer member 13 is substantially of the same design as the spacer member 13 of Figures 1, 2, 4, 5 and 6 and hence will not be described in further detail herein. The spacer member 13 is selectively adjustable in length to permit adjustment of the spacing between first arm 11 and second arm 12 in order to permit the immobiliser 10 to accommodate a range of wheel widths.

At its free end 11' first arm 11 has rigidly secured thereto a first formation, for obscuring one or more nuts, studs, screws or screw apertures of a vehicle wheel. The first formation is in the embodiment shown in the form of a socket 46. The features of the socket 46 are described in more detail hereinbelow.

Second arm 12 includes an engagement formation 47, also described in more detail below, for engaging part of a said wheel when the socket 46 is in use to obscure one or more nuts, studs, screws or screw apertures.

The lengths of the arms 11, 12 and the spacing therebetween defined by the setting of the spacer member 13 are such that the respective arms 11, 12 in use juxtapose the oppositely disposed faces of a vehicle wheel with the spacer member lying externally of the outer periphery of the wheel. Thus in like manner to the immobilisers of Figures 1 to 8 the immobiliser of Figure 9 very effectively limits the rotation of a wheel to which it is secured, when the wheel is supporting a vehicle and is in contact with the ground. This is because only a very small amount of rotation of a wheel having the immobiliser 10 secured thereto is possible before the ends of the arms 11, 12 adjacent the spacer member 13 engage either the ground or the bodywork of the vehicle. In turn this means that the immobiliser 10 is a deterrent against theft of a vehicle to which it is secured.

In like manner to the arrangements disclosed in relation to Figures 1 to 8 the first arm 11 is pivotably secured at pivot 51 to the spacer member 13; and the spacer member 13 is pivotably secured at pivot 52 to the second arm 12. Therefore the immobiliser 10 is foldable between an operative configuration and a collapsed configuration.

The length of first arm 11 is, as stated, non-adjustable and socket 46 is rigidly secured to its free end 11 for example by means of the welded fillet 48 and one or more further welds 49 visible in Figure 9. The further welds secure the socket 46 on opposite, exterior sides to upstanding side walls 27 defining part of the channel section of the first arm 11.

Other methods of securing the socket 46 to the arm 11 are of course possible and will be known to those of skill in the art.

Also, it is possible within the scope of the invention for the length of the first arm or of the arrangement for securing the socket 46, to be adjustable. One suitable arrangement for achieving length adjustability of the first arm 11 is disclosed in relation to Figures 1 to 8.

Socket 46 is as shown generally shaped as a hollow cylinder and includes proximal and distal portions 46', 46" respectively.

Proximal portion 46' is secured to the free end 11' of first arm 11 and is of larger external diameter than distal portion 11".

The cylinders defining the proximal and distal portions 46', 46" are generally coaxial and extend parallel to one another. A uniform, tapered portion 53 rigidly interconnects the respective portions 46' and 46" and provides a smooth transition therebetween on the exterior of the socket 46.

Distal portion 46" opens at its free end remote from arm 11 in a circular aperture 54.

The side walls 27 defining in part the channel section of first arm 11 omit the wheel rim engaging formation 26 of the embodiment of Figure 1 hereof. Instead, the side walls 27 each include, at mutually aligned locations along the lengths of the side walls, contoured recesses 56 the shape of which resembles the bulge in the wall of an inflated vehicle tyre.

Second arm 12 is similarly formed from a pair of wall members 57 that are spaced from one another by a base member defining a channel section.

When the immobiliser 10 is in its use configuration as shown in Figure 9 further contoured recesses 58 defined in the edges of the wall members 57 lie approximately opposite the contoured recesses 56 described above. In like manner to the recesses 56 the recesses 58 mimic the profile of an inflated vehicle tyre. Thus the recesses 56, 58 between them define a series of engaging portions that are shaped generally in conformity with the profile of an inflated vehicle tyre.

Use of the immobiliser 10 of the invention is similar to that of the immobilisers 10 of Figures 1 to 8. However the above-described features of the immobiliser 10 of the invention render it particularly suitable for use on wheels made of a lightweight alloy material.

Such wheels are easily scuffed, scraped and damaged by contact with metal items. Damage of this kind is unsightly, often irreparable and occasionally even dangerous when the damage causes microscopic cracking of the crystalline structure of the metal alloy. The features of the immobiliser 10 of Figure 9 minimise and in many cases advantageously eliminate such problems.

In almost all designs of lightweight alloy vehicle wheel it is necessary for the vicinity of any securing nuts, studs or screws to be deeply recessed into the in-use visible face of the wheel. Such a design confers good strength characteristics on the wheel.

The socket 46 having proximal and distal portions 46' and 46" of differing exterior diameters is specially shaped for receipt in one of the resulting recesses so as to obscure the nut or screw against unauthorised removal. The shape of the socket 46 however either entirely avoids contact between the metal of the immobiliser and the metal of the wheel in such a location, or at least minimises the contact to only a limited number of points on the periphery of the recess. This in turn minimises the risk of the metal of the wheel suffering damage, while still providing strong resistance to unauthorised removal of the nut or screw by providing a closely fitting shroud that obscures the nut/stud.

In this regard it is desirable that the length of the first arm 11 is non-adjustable, so as to reduce the chance that the socket will be wrongly located (so as to engage firmly or over a large area the material of the wheel). However the length of the first arm 11 is in the design of the immobiliser 10 kept as short as possible (for a given size of wheel/tyre combination) in order to minimise the moment arm that a felon might use in seeking to prise the immobiliser 10 off the wheel.

The contoured recesses 56, 58 are designed so that the primary engagement between the immobiliser 10 and the vehicle wheel occurs in the vicinity of the tyre of the wheel.

An inflated tyre typically bulges somewhat relative to the rim of the wheel to which it is secured, whereby through use of the contoured recesses the arms 11, 12 engage only the compound of the tyre and not the metal of the wheel. Thus over the major part of their lengths there is a clearance between the arms 11, 12 and the metal of the wheel. However the shapes of the contoured recesses 56, 58 and of the arms 11, 12 generally are such as to minimise this clearance as much as possible and hence minimise the chance for a felon to place an implement between the wheel and one of the arms with a view to prising the immobiliser off the wheel.

A further, optional feature of the first embodiment of the invention is visible in Figure 9.

This is a profiled recess 61. Such a recess is formed in each of the wall members 57 such that two of the recesses 61 are in register with one another on opposite sides of second arm 12, part-way along its length.

The shape of each profiled recess 61 is, the embodiment shown, similar to that of a shark's fin. Thus a distal, curved recess portion 62 extends from a location adjacent the free end of second arm 12 inwardly and towards pivot 52. Curved recess portion 62 terminates at the edge of contoured recess 58 in a rectilinear edge 63 extending in use of the immobiliser 10 in a direction generally parallel to the longitudinal extent of spacer member 13.

When the immobiliser is in use to secure a vehicle wheel against theft the profiled recess 61 minimises the risk of damage occurring to the wheel during an attempt to prise the immobiliser 10 off the wheel.

Any such attempt would almost certainly require a felon to attack the immobiliser 10 by placing an implement between the first arm 11 and the adjacent face of the wheel. The felon would then seek to lever the first arm 11 away from the wheel.

This tends to cause the immobiliser 10 to rotate about the exterior of the tyre of the wheel, thereby causing the second arm 12 to slide along the rear (obscured) face of the wheel adjacent which it lies.

Were the second arm 12 during such movement to be in engagement with the rim of the wheel, damage might occur. Such damage might not be immediately apparent to the observer yet could result in deflation of the tyre or even disintegration of the wheel during subsequent, high speed use.

The curved recess portion 62 prevents engagement between the wheel rim and the second arm 12 over the major part of such movement as may occur during prising of the first arm 10.

As a result of the robustness with which the Figure 9 immobiliser 10 preferably is constructed most felons would fail to prise the first arm 10 away from the vehicle wheel, and would give up their attempts at theft as described above. A minority of felons is however tenacious and might continue to prise the first arm 11 for a long period.

In such an event the rectilinear edge 63 of each profiled recess 61 would, as a "last resort", engage the rim of the wheel and further deter even the most tenacious thief, by stabilising the second arm 12 and limiting the movement of the immobiliser 10 around the tyre before the first arm 11 is prised clear of the wheel or tyre.

When the profiled recesses are present it may be desirable to provide for length adjustability of the second arm 12. Such a feature would allow adjustment of the second arm 12 to suit a particular wheel design, thereby ensuring that the rectilinear edge 63 is positioned to engage the wheel rim as aforesaid.

The length adjustability may be achieved, for example, by manufacturing the second arm from two channel-section members, one of which is slidably received in, and protrudes from, the other. The walls of the protruding channel-section member would have formed therein the profiled recess 61; and the two channel-section members would be securable together, through the use of one or more fastening arrangements, to lock them in chosen positions one relative to the other.

The profiled recess 61 may within the scope of the invention of course have other profiles than that shown.

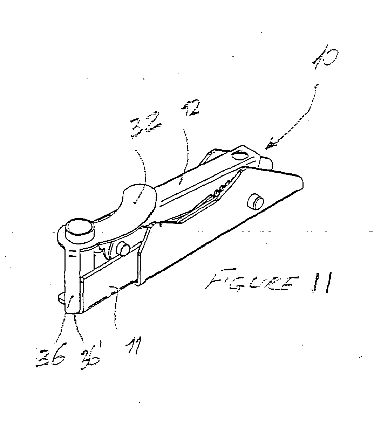

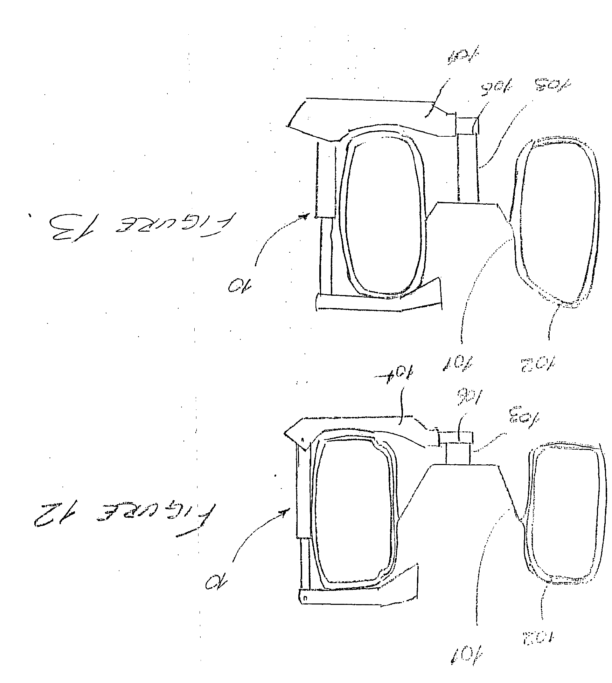

Referring now to Figures 10 and 11 there is shown a further embodiment of immobiliser 10 according to the invention.

The immobiliser 10 of Figures 10 and 11 includes a variant on the arrangement shown in Figures 7 and 8 hereof, in which a cover plate 32 is moveably secured on a socket 14 in turn secured at the free end of the first arm 11 of an immobiliser 10.

In the arrangement of Figures 7 and 8 the cover plate includes an aperture 34 that fits over the socket 14; and a tab 36 protruding therefrom for selective engagement in a formation forming part of the first arm 11.

The cover plate is moveable longitudinally along the socket 14. When the cover plate is at an extreme of movement remote from the first arm 11 the tab 3 6 is disengaged from the formation. Consequently the cover plate is rotatable between collapsed and protruding configurations relative to the first arm 11.

The cover plate 32 is slideable from its remote extreme of movement towards the first arm 11 when the tab is aligned for receipt in the formation. Following such sliding the tab engages in the formation to prevent rotation of the cover plate.

The arrangement is such that on application of the immobiliser 10 to a vehicle wheel the wheel presses the tab into the formation, thereby securing the cover plate in place obscuring at least one nut, stud, screw or socket in addition to that obscured by the socket 46 attached to the first arm 11.

Figures 10 and 11 hereof show a similar arrangement to that described in the immediately preceding paragraphs.

In Figures 10 and 11 the tab 36 differs from that of Figures 7 and 8 by reason of its increased length. This is sufficient to permit the tab 36 to penetrate the first arm 11 when in its protruding configuration as shown in Figure 10. To this end the first arm has formed in the member defining the bottom of its channel section a through-going aperture 59.

When the tab 32 is folded to its collapsed configuration as shown in perspective view in Figure 11, it may be positioned to overlie the collapsed second arm 12. In this configuration the free end 36' of the tab 36 may as shown tuck adjacent or into the opening defined at the free end of the channel section of the first arm 11.
Thus the tab 36 and cover plate 32 may retain the immobiliser in its collapsed configuration.

Although the socket 46 is shown in Figure 9 as bein, essentially cylindrical, other shapes of the first formation are possible within the scope of the invention. Such alternatives will occur to those of skill in the art of metal fabrications.

Also the features of Figures 10 and 11 hereof may if desired be used in the embodiment of Figure 1, following such modification as will be necessary and within the knowledge of the worker of skill in the art.

Figures 12 and 13 show yet another variant within the scope of the broad concepts of the invention.

In Figures 12 and 13 the immobiliser 10 is in each case shown secured about the periphery of a vehicle wheel 101 (shown in schematic cross sectional view) having secured about its outer extremity in a *per se* known manner an inflated tyre 102.

The immobiliser 10 of Figures 12 and 13 may be essentially of any of the designs described hereinabove.

Immobiliser 10 as shown in Figures 12 and 13 additionally includes the feature that its cover formation, which in the embodiment shown is in the form of a socket 103, is of adjustable length.

As shown the socket 103 protrudes from the free end of first arm 104 of immobiliser 10 to engage in use the flat face defining the dished portion of vehicle wheel 101 so as to obscure one or more nuts, studs or recesses as described hereinabove. Thus the length adjustability of the socket 103 permits the ready accommodation of wheel designs having both a deep or pronounced dishing and a more shallow dishing. Exaggerated examples of these two wheel designs are shown respectively in Figures 13 and 12. The length adjustability of the socket (or other design of cover member, if fitted) allows it to engage or lie closely adjacent the dished portion of a range of wheel designs having differing degrees of dishing. The length adjustability of socket 103 is also shown in an exaggerated way, for proposes of illustration.

The arrangement of Figures 12 and 13 may if desired include a locking arrangement shown schematically by reference numeral 106. The precise design of locking arrangement will readily occur to those of skill in the art. The purpose of the locking arrangement is temporarily (i.e. during a period of use) to lock the cover member 103 at a chosen extent of protrusion that is tailored to the design of wheel on which the immobiliser is installed. Preferably the locking arrangement is such that only an authorised user (having for example the correct key) can unlock the cover member to permit adjustment of the degree of its protrusion.

## Claims

1. An immobiliser for a vehicle wheel comprising first and second arms that are secured together by a spacer member whose length is adjustable to permit adjustment of the spacing between the said arms, the first arm having secured thereto a cover formation for obscuring one or more nuts, studs or screw apertures of a vehicle wheel and at least the second arm including one or more formations for engaging part of a said wheel when the cover formation is in use to obscure one or more nuts or studs, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and wherein the spacer member is pivotably secured to the second arm, whereby the immobiliser is foldable between an operative configuration and a collapsed configuration.

2. An immobiliser according to Claim 1 wherein the second arm defines a receptacle for the spacer member when the immobiliser is in its collapsed configuration.

3. An immobiliser according to Claim 1 or Claim 2, wherein the first arm defmes a receptacle for the second arm and the spacer member when the immobiliser is in its collapsed configuration.

4. An immobiliser according to any of Claims 1 to 3 wherein the length of the first arm is selectively adjustable to permit alteration of the distance between the cover formation and the spacer member.

5. An immobiliser according to Claim 4 wherein the first arm includes first and second ann portions that are releasably slideably mateable together so as to permit adjustment of the length of the first member; and a fastener for locking the first and second arm portions together in a chosen position one relative to the other.

6. An immobiliser according to Claim wherein one of the said arm portions includes a socket in which is slideably receivable the other said arm portion. and
wherein the fastener penetrates at least one of the arm portions to engage the other of the arm portions for locking the arm portions together in a chosen position one relative to the other.

7. An immobiliser for a vehicle wheel comprising first and second arms that are secured together by a spacer member whose length is adjustable to permit adjustment of the spacing between the said arms, the first arm having secured thereto a cover formation for obscuring one or more nuts, studs or screw apertures of a vehicle wheel and at least the second arm including one or more formations for engaging part of a said wheel when the cover formation is in use to obscure one or more nuts, studs or screw apertures, the lengths of the arms and the position of the spacer member relative thereto permitting the said arms respectively to juxtapose the oppositely disposed faces of a vehicle wheel with the spacer member lying externally of the outer periphery of the wheel, the length of the first arm being selectively adjustable to permit alteration of the distance between the cover formation and the spacer member.

8. An immobiliser according to Claim 7 wherein the first arm includes first and second arm portions that are releasably slideably mateable together so as to permit adjustment of the length of the first member; and a fastener for locking the first and second arm portions together in a chosen position one relative to the other.

9. An immobiliser according to Claim 8 wherein one of the said arm portions includes a socket in which is slideably receivable the other said arm portion, and wherein the fastener penetrates at least one of the arm portions to engage the other of the arm portions for locking the arm portions together in a chosen position one relative to the other.

10. An immobiliser according to Claim 4, any preceding claim depending from Claim 4, or any of Claims 7 to 9, wherein the cover formation includes one or more cover members secured to the first arm at a location remote from the spacer member such that adjustment of the length of the first arm causes adjustment of the distance of the cover formation from the spacer member.

11. An immobiliser according to Claim 10 wherein the cover member includes a socket that is closed at one end adjacent the first arm and includes spaced therefrom an opening for receiving therein a nut or a stud of a vehicle wheel.

12. An immobiliser according to Claim 10 or Claim 11 wherein the cover formation includes a plate secured to the first arm for covering a plurality of nuts, studs or screw apertures of a vehicle wheel.

13. An immobiliser according to Claims 11 and 12 wherein the socket protrudes via an aperture perforating the plate.

14. An immobiliser according to Claim 12 or Claim 13 wherein the plate is rotatably secured to the first arm, whereby the orientation of the plate is adjustable relative to the first arm.

15. An immobiliser according to Claim 14 when dependent from Claim 13 wherein the plate is rotatably secured to the socket.

16. An immobiliser according to Claim 14 including a hinge interconnecting the plate and the first arm.

17. An immobiliser according to Claim 14 or any preceding claim depending therefrom including a limit arrangement limiting the rotation of the plate relative to the first arm.

18. An immobiliser according to Claim 17 wherein the limit arrangement includes limit portions of the plate and the first arm that are mutually engageable.

19. An immobiliser according to Claim 18 wherein the limit portion of the plate includes a projection and the first arm includes a recess in which the projection is releasably receivable.

20. An immobiliser according to Claim 19 wherein the shape of the plate is such that:
(i) when the projection is received in the recess the plate is orientated so as, in use of the immobiliser, to cover or otherwise obscure two or more, nuts, studs or screw apertures of a vehicle wheel; and
(ii) when the projection is disengaged from the recess the plate adopts a position restricting or preventing the fitting of the immobiliser to a vehicle wheel.

21. An immobiliser according to Claim 12 or Claim 14 wherein the plate includes a plurality of fixing formations for securing the plate and the first arm together in a plurality of positions.

22. An immobiliser according to Claim 12 or any preceding claim, including a socket, protruding from the plate, that is closed at one end adjacent the plate and includes spaced therefrom an opening for receiving therein a nut or stud of a vehicle wheel.

23. An immobiliser according to Claim 7 or any preceding claim depending therefrom wherein the first arm is pivotably secured to the spacer member; and wherein the spacer member is pivotably secured to the second arm, whereby the immobiliser is foldable between an operative configuration and a collapsed configuration.

24. An immobiliser according to Claim 23 wherein the second arm defines a receptacle for the spacer member when the immobiliser is in its collapsed configuration.

25. An immobiliser according to Claim 23 or Claim 24 wherein the first arm defines a receptacle for the second arm and the spacer member when the immobiliser is in its collapsed configuration.

26. An immobiliser according to any preceding claim wherein the first arm includes wall member having formed therein a wheel-engaging formation for engaging part of a vehicle wheel.

27. An immobiliser according to Claim 26 wherein the first arm includes a projection in the vicinity of the wheel-engaging formation.

28. An immobiliser according to Claim 26 or Claim 27 wherein the wheel-engaging formation is or includes one or more recesses formed in the wall member.

29. An immobiliser according to any preceding claim wherein the second arm includes a wall member having formed therein one or more wheel-engaging formations for in use of the immobiliser engaging a vehicle wheel on its opposite face to that adj acent which the first arm engages the wheel.

30. An immobiliser according to any preceding claim wherein the second arm includes a wall member having formed therein a plurality of teeth defining the formations for engaging part of a wheel.

31. An immobiliser according to any preceding claim wherein the spacer member comprises two elongate sub-members that are longitudinally moveable one relative to the other, the said sub-members being connected one to the other by a jack mechanism such that on operation of the jack mechanism the positions of the sub-members relative to one another are adjustable so as to adjust the length of the spacer member and hence the spacing between the first and second arms.

32. An immobiliser according to Claim 31 wherein the sub-members define a shroud that obscures the jack mechanism, the shroud having formed therein an aperture to permit access to and operation of the jack mechanism by a user.

33. An immobiliser according to Claim 32 including a releasable locking member for selectively closing off the aperture formed in the shroud, whereby to limit access to the jack mechanism.

34. An immobiliser according to any of Claims 31 to 33, wherein the jack mechanism includes a lead screw and nut combination, one of the lead screw and nut being secured to one of the sub-members of the spacer member ; and the other being secured to the other of the sub-members.

35. An immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, wherein the first formation includes a proximal portion, adjacent the first arm, and a distal portion secured to the proximal portion and spaced from the first arm, at least one exterior dimension of the proximal portion being greater than a corresponding exterior dimension of the distal portion.

36. An immobiliser according to Claim 35 wherein the proximal and distal portions of the first formation are cylinders and wherein diameter of the exterior of the proximal portion is greater than the diameter of the exterior of the distal portion.

37. An immobiliser according to Claim 36 including a tapered portion interconnecting the proximal and distal portions of the first formation.

38. An immobiliser according to Claim 36 or Claim 37 wherein the distal portion of the first formation is hollow and includes an aperture that is open at an end remote from the first arm.

39. An immobiliser according to any preceding claim wherein at least a part of the first formation in use is receivable in a recess, in an alloy wheel, for accommodating a nut, a stud or a screw for securing the wheel to a vehicle.

40. An immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, wherein the first formation includes a proximal portion, adjacent the first arm, and a distal portion secured to the proximal portion and spaced from the first arm, wherein the first and/or the second arm includes one or more wheel engaging portions shaped generally in conformity with the profile of an inflated vehicle tyre.

41. An immobiliser according to Claim 40 wherein the first and the second arm each include a pair of mutually divergent wall members, and wherein the or each said wheel engaging portion is at least partly defined by a said wall member.

42. An immobiliser according to Claim 40 or Claim 41 wherein the wheel engaging-portion of the first arm is engageable with a said wheel only in the vicinity of an inflated tyre forming part of the wheel.

43. An immobiliser for a vehicle wheel comprising first and second arms that are secured together by a spacer member whose length is adjustable to permit adjustment of the spacing between the said arms, the first arm having secured thereto a first formation for obscuring one or more nuts, studs, screws or screw apertures of a vehicle wheel and the second arm including one or more engagement formations for engaging part of a said wheel when the first formation is in use to obscure one or more nuts, studs, screws or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the first arm is pivotably secured to the spacer member; and the spacer member is pivotably secured to the second arm, whereby the immobiliser is foldable between an operative configuration and a collapsed configuration, wherein the first formation includes a proximal portion, adjacent the first arm, and a distal portion secured to the proximal portion and spaced from the first arm, wherein the formation includes a cover plate that is moveably secured to the first arm and in use of the immobiliser obscures one or more said nuts, studs, screws or screw apertures.

44. An immobiliser according to Claim 43 wherein the cover plate includes protruding therefrom a securing protrusion that in use of the immobiliser is received in an aperture extending through part of the first arm such that the securing protrusion perforates the first arm so as to prevent movement of the cover plate relative to the first arm, the securing protrusion being releasable from the aperture on removal of the immobiliser from a said vehicle wheel.

45. An immobiliser according to Claim 44 wherein when the cover plate is moveable relative to a cylinder secured to the first arm in both the circumferential and longitudinal directions defined by the cylinder except when the immobiliser is in use.

46. An immobiliser according to any preceding claim wherein the second arm includes formed therein a profiled recess for limiting engagement, of the second arm and the rim of a wheel to which the immobiliser is secured, to an extreme of movement of the second arm relative to a said vehicle wheel.

47. An immobiliser according to Claim 46 wherein the or each profiled recess includes a curved recess portion terminating in a rectilinear edge.

48. An immobiliser according to Claim 47 wherein the curved recess portion extends between a distal region of the second arm that is spaced from the free end of the second arm, and the rectilinear edge that is spaced further from the free edge.

49. An immobiliser according to any preceding claim including a length adjuster for adjusting the length of the second arm.

50. An immobiliser for a vehicle wheel comprising first and second arms that are secured together by a spacer member the length of which is adjustable to permit adjustment of the spacing between the said arms, the first arm having secured thereto a cover formation for obscuring one or more nuts, studs or screw apertures of a vehicle wheel and at least the second arm including one or more formations for engaging part of a said vehicle wheel when the cover formation is in use to obscure one or more nuts, studs or screw apertures, the lengths of the arms and the position of the spacer member relative thereto permitting the said arms respectively to juxtapose the oppositely disposed faces of a vehicle wheel with the spacer member lying externally of the outer periphery of the wheel, wherein the cover member protrudes from the first arm and wherein the length of protrusion of the cover member is adjustable.

51. An immobiliser according to Claim 50 wherein the cover member is slideable relative to the first arm and the immobiliser includes a lock for locking the cover member at a chosen extension relative to the first arm.
